# EUROPEAN PATENT APPLICATION

(11) **EP 3 412 431 A1**
(43) Date of publication of application: **12.12.2018**
(21) Application number: 17209224.9
(22) Date of filing: 21.12.2017
(51) Int. Cl.: B29C 64/40, B29C 64/386, B33Y 10/00, B33Y 50/02

(54) **WARPAGE PREVENTING PRINTING METHOD OF A 3D PRINTER**

(30) Priority: 07.06.2017 CN 201710422669
(71) Applicant: XYZprinting, Inc., New Taipei City 22201 (TW); Kinpo Electronics, Inc., New Taipei City 22201 (TW)
(72) Inventor: Wu, Bo-Yi, New Taipei City 22201 (TW); Hsieh, Hsin-Ta, 22201 New Taipei City (TW)
(74) Representative: Patentanwälte Bals & Vogel

(57) **Abstract**

A warpage prevented printing method includes following steps: obtaining raft printing information when a printing action is about to be performed by a 3D printer (1); controlling a print-head (12) of the 3D printer (1) to print a raft (4) on a printing platform (11) of the 3D printer (1) according to the raft printing information; obtaining object printing information corresponding to a first printing layer of a 3D object; controlling the print-head (12) raising along a Z axis to a printing height of the first printing layer; controlling the print-head (12) to print a slicing object (31) of the first printing layer on the raft according to the object printing information; determining whether the 3D object is printed completely; and, re-executing above steps for printing next slicing object (31) of next printing layer of the 3D object until the 3D object is printed completely.

## Description

### BRACKGROUND OF THE INVENTION

### 1.Technical Field

The techincal field relates to a printing method of a 3D printer, and specifically relates to a warpage prevented printing method of a 3D printer.

### 2.Description of Related Art

A 3D printer may read printing information input by a user, and squeezes materials on a print bed for stacking a physical 3D model corresponding to the printing information, which is very convenient.

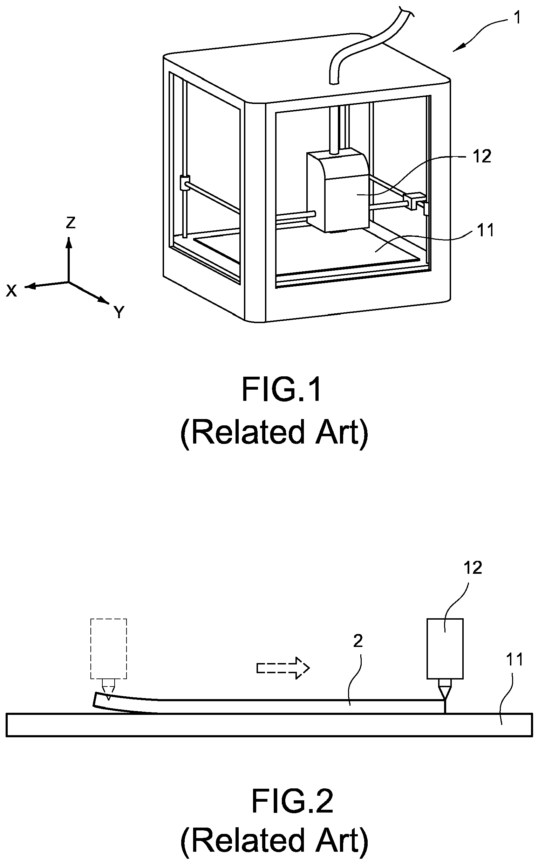

Fig. 1 is a schematic view of a 3D printer in related art. Fig. 1 discloses a 3D printer (referred to as the printer 1 hereinafter), and the printer 1 includes a printing platform 11 and a print head 12. As shown in Fig. 1, when performing printing, the printer 1 controls the print head 12 to move along an X axis, a Y axis, and a Z axis according to the printing information that corresponds to a 3D object, and controls the print head 12 to squeeze materials when the print head 12 is moved to corresponding positions upon the printing platform 11. Therefore, the printer 1 may stack the materials for generating a physical 3D model on the printing platform 11. The printer 1 shown in Fig. 1 is a fused deposition modeling (FDM) 3D printer, but not limited thereto.

Fig. 2 is a diagram showing a warpage phenomenon of a 3D model in related art. The aforementioned printer 1 mainly uses thermoplastic materials. When performing printing, the printer 1 heats the print head 12, and the print head 12 is controlled to squeeze the fused materials onto the printing platform 11, so as to use the materials to build an object 2 of each printing layer of a 3D model. Fig. 2 shows an object 2 corresponding to a lowest layer (which is a first layer) of the 3D model.

After the materials are squeezed out of the print head 12, the materials start to cool down. As shown in Fig. 2, if the length of the object 2 is too long, the earlier-printed end of the object 2 may start to atrophy due to thermal expansion/contraction theorem while the print head 12 is printing the object 2. Therefore, a warpage phenomenon is caused on the object 2, and it will seriously affect the quality of the printed 3D model.

### SUMMARY OF THE INVENTION

The invention is directed to a warpage prevented printing method of 3D printer, which may first print a removable raft and then prints a 3D model upon the raft, so as to prevent a warpage phenomenon from being generated on the bottom of the 3D model.

In one of the exemplary embodiments, the method of the present application includes following steps: obtaining raft printing information when a printing action is about to be performed by a 3D printer; controlling a print-head of the 3D printer to print a raft on a printing platform of the 3D printer according to the raft printing information; obtaining object printing information of a first printing layer of a 3D object; controlling the print-head raising along a Z axis to a printing height of the first printing layer; controlling the print-head to print a slicing object of the first printing layer on the raft according to the object printing information; determining whether the 3D object is printed completely; and, re-executing above steps for printing next slicing object of next printing layer of the 3D object until the 3D object is printed completely.

In comparison with related art, each embodiment disclosed in the present invention may print a desired 3D model on a removable raft which is about to throw away. Therefore, a warpage phenomenon can be prevented from being generated on the bottom of the 3D model while printing, and the quality of the 3D model is assured.

### BRIEF DESCRIPTION OF THE DRAWINGS

Fig. 1 is a schematic view of a 3D printer in related art.
Fig. 2 is a diagram showing a warpage phenomenon of a 3D model in related art.
Fig. 3 is a diagram showing a 3D model according to a first embodiment of the present invention.
Fig. 4A is a first printing flowchart according to a first embodiment of the present invention.
Fig. 4B is a second printing flowchart according to the first embodiment of the present invention.
Fig. 5A is a diagram showing a first printing action according to a first embodiment of the present invention.
Fig. 5B is a diagram showing a second printing action according to the first embodiment of the present invention.
Fig. 5C is a diagram showing a third printing action according to the first embodiment of the present invention.
Fig. 5D is a diagram showing a fourth printing action according to the first embodiment of the present invention.
Fig. 5E is a diagram showing a third printing action according to a second embodiment of the present invention.
Fig. 5F is a diagram showing a fourth printing action according to the second embodiment of the present invention.
Fig. 6A is a first printing flowchart according to a second embodiment of the present invention.
Fig. 6B is a second printing flowchart according to the second embodiment of the present invention.
Fig. 7A is a diagram showing fillers according to a first embodiment of the present invention.
Fig. 7B is a diagram showing fillers according to a second embodiment of the present invention.

### DETAILED DESCRIPTION OF THE INVENTION

In cooperation with the attached drawings, the technical contents and detailed description of the present invention are described thereinafter according to multiple embodiments, being not used to limit its executing scope. Any equivalent variation and modification made according to appended claims is all covered by the claims claimed by the present invention.

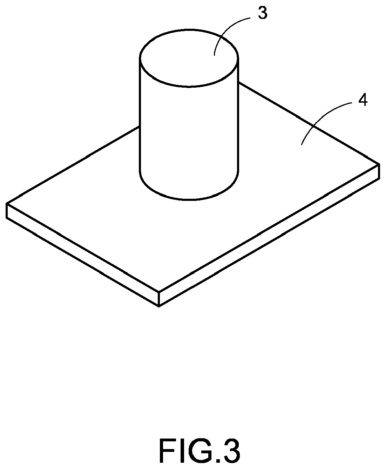

Fig. 3 is a diagram showing a 3D model according to a first embodiment of the present invention. Each embodiment of the present disclosure is to prevent a warpage phenomenon from being generated on a bottom of a 3D model 3 printed by the aforementioned 3D printers. In particular, the present disclosure is adopted by each type of 3D printers, for example, fused deposition modeling (FDM) 3D printers, digital light processing (DLP) 3D printers, stereo lithography (SLA) 3D printers, etc., not limited thereto. For the sake of description, the FDM 3D printer 1 shown in Fig. 1 will be taken as an example in the following of the specification, but not intended to limit the scope of the present invention.

For the above objective, each embodiment of the prsent disclosure may control a print head of the 3D printer 1 to print a raft 4 on a printing platform of the 3D printer 1 (as the print head 12 and the printing platform 11 shown in Fig. 1) before starting printing a desired 3D model 3, and then controls the print head 12 to print the 3D model 3 on the raft 4.

In particular, without printing the raft 4, the 3D printer 1 is directly printing the 3D model 3 on the printing platform 11; with the raft 4, the 3D printer 1 is to print the 3D model 3 on the printed raft 4. When performing printing, the adhesion between the buttom of the 3D model 3 and the top face of the raft 4 (if the raft 4 exists) is larger than that between the bottom of the 3D model 3 and the top face of the printing platform 11 (if the raft doesn't exist). As a result, the present invention prints the 3D model 3 on the raft 4 for preventing the warpage phenomenon from being generated on the bottom of the 3D model 3 due to the larger adhesion between the bottom of the 3D model 3 and the top face of the raft 4. In each of the embodiments of the present disclosure, the print head 12 of the 3D printer 1 may use same material to print both of the 3D model 3 and the raft 4, but not limited thereto.

It is worth saying that the raft 4 is directly printed on the printing platform 11, so the warpage phenomenon may be generated on the bottom of the raft 4 if the length of the raft 4 is way too long. However, the raft 4 is a removable model that can be threw away after printing, which is not necessary to the user. Therefore, even if the warpage phenomenon is generated on the bottom of the raft 4, it won't affect the appearance of the 3D model 3 desired by the user.

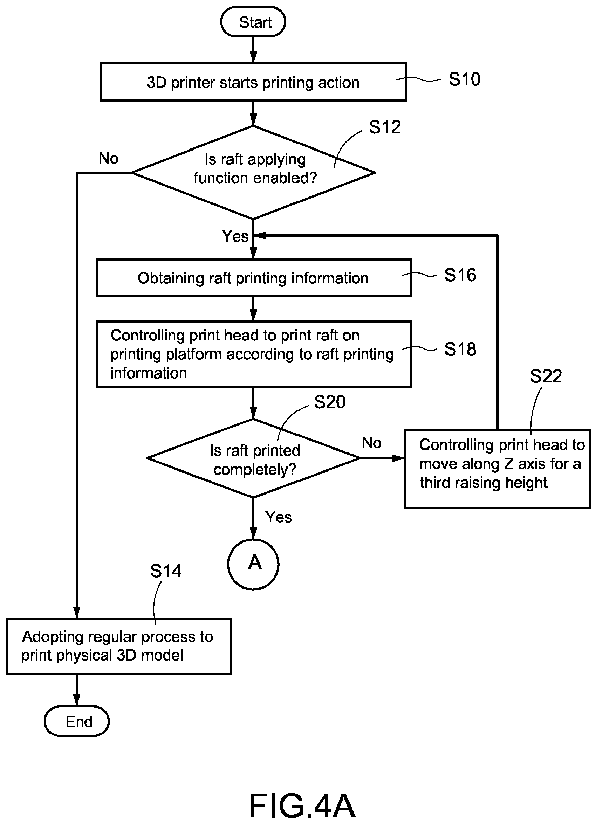

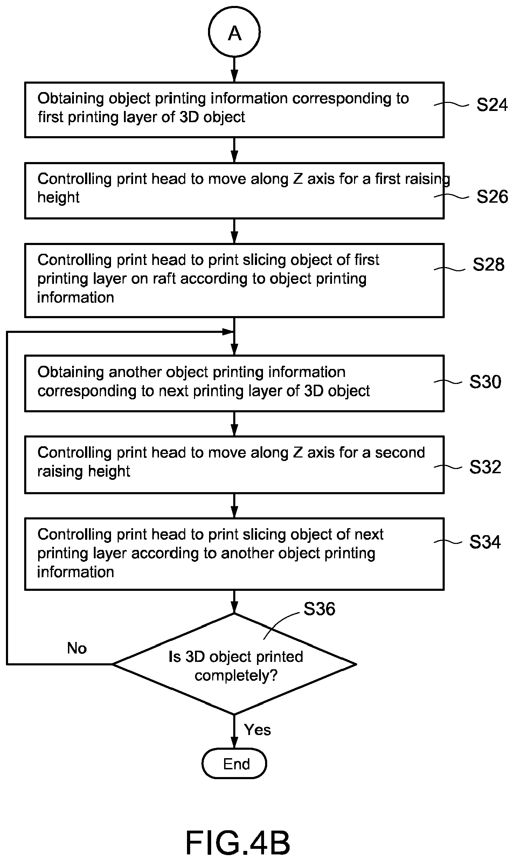

Refers to Fig. 4A and Fig. 4B, Fig. 4A is a first printing flowchart according to a first embodiment of the present invention, and Fig. 4B is a second printing flowchart according to the first embodiment of the present invention. Both Fig. 4A and Fig. 4B disclose a warpage prevented printing method of the present invention, and the method is adopted by the 3D printer 1 as shown in Fig. 1.

First, the 3D printer 1 or a computer device (not shown) connected to the 3D printer 1 is provided to perform a slicing process to a 3D object needed by the user, so as to generate multiple records of object printing information that respectively correspond to multiple printing layers of the 3D object. In one embodiment, each of the multiple records of object printing information may respectively record printing-route data of each printing layer (when printing a monochrome 3D model). In another embodiment, each of the object printing information may respectively record printing-route data and color printing data of each printing layer (when printing a color 3D model).

After the aforementioned slicing process, the 3D printer 1 may start a printing action (step S10). In this embodiment, the 3D printer 1 is capable of a raft applying function. When performing the printing action, the 3D printer 1 determines if the raft applying function is enabled by the user (step S12), i.e., the 3D printer 1 determines if the user is willing to print a raft on the bottom of a desired 3D model.

If the raft applying function is not enabled, the 3D printer 1 adopts a regular process to print a physical 3D model according to the aforementioned object printing information (step S14). In this embodiment, the printing action in step S14 is similar to the printing approaches adopted in related art, which is omitted here.

If the raft applying function is enabled, the 3D printer 1 executes each step (i.e., step S16 to step S36) as shown in Fig. 4A and Fig. 4B, so as to complete the printing action for printing the raft and the desired 3D model.

In particular, if the raft applying function is enabled, the 3D printer 1 first obtains a record of raft printing information (step S16), and controls the print head 12 to directly print the raft on the printing platform 11 according to the raft printing information (step S18). It should be mentioned that after step S16, the 3D printer 1 may first control the print head 12 to move to a position upon the printing platform 11 and locates the print head 12 at a printing height of the raft (i.e., keeps a specific distance between the print head 12 and the printing platform 11), and then controls the print head 12 to perform the printing action for printing the raft thereon.

In one embodiment, the raft printing information may be default data stored in a memory of the 3D printer 1. In another embodiment, the 3D printer 1 may store multiple sets of the record(s) of the raft printing information that respectively correspond to multiple types of rafts. The user may choose one of the multiple types of rafts, and the 3D printer 1 may obtain the raft printing information corresponding to the chosen type of raft. In a further embodiment, the 3D printer 1 may dynamically generate the raft printing information according to the size of the desired 3D model to be printed.

After step S18, the 3D printer 1 determines whether the raft is printed completely (step S20).

If the raft includes only one layer (i.e., only one printing layer), the 3D printer 1 finishes the printing action of the raft after step S18.

If the raft includes multiple printing layers, the 3D printer 1 may obtain one of multiple records of the raft printing information that corresponds to one of the multiple printing layers of the raft in step S16, and prints a raft object corresponding to one printing layer of the raft according to the obtained raft printing information in step S18.

If the raft includes multiple printing layers, the 3D printer 1 may determine whether the raft is printed completely after step S18 (step S20), i.e., the 3D printer 1 determines if the current-printed printing layer is a last printing layer of the raft. If the raft is not completed, the 3D printer 1 controls the print head 12 to move along a Z axis, so as to locate the print head 12 at a printing height of the next printing layer of the raft (step S22). In one embodiment, the 3D printer 1 controls the print head 12 to lift along the Z axis for a third raising height in step S22.

Next, the 3D printer 1 re-executes step S16 and step S18 for obtaining another record of the raft printing information corresponding to the next printing layer of the raft, and prints another raft object corresponding to the next printing layer of the raft according to the obtained raft printing information.

If the 3D printer 1 determines that the raft is completed in step S20 (i.e., multiple raft objects that correspond to the multiple printing layers of the raft are all printed completely, and a raft may be stacked via the multiple raft objects), the 3D printer 1 further executes following step S24.

In particular, after the raft is printed completely, the 3D printer 1 obtains one of the multiple records of object printing information that corresponds to a first printing layer of the desired 3D object (step S24), and controls the print head 12 to move along the Z axis, so as to locate the print head 12 at a printing height of the first printing layer of the 3D object (step S26). In one embodiment, the 3D printer 1 controls the print head 12 to lift along the Z axis for a first raising height in step S26.

Next, the 3D printer 1 controls the print head 12 to print a slicing object of the first printing layer on the raft according to the object printing information corresponding to the first printing layer (step S28). In particular, the 3D printer 1 controls the print head 12 to squeeze the materials onto the raft object of the last printing layer of the raft (if the raft includes multiple printing layers), so as to print the slicing object of the first printing layer of the 3D object.

In one embodiment, an area of the raft must be larger than that of the bottom of the 3D object. In another embodiment, at least the area of the raft object of the last printing layer of the raft must be larger than that of the slicing object of the first printing layer of the 3D object. Therefore, the whole bottom of the 3D model is printed on and within the raft, and the warpage phenomenon is prevented from being generated on the bottom of the 3D model.

After step S28, the 3D printer 1 obtains another record of the object printing information that corresponds to next printing layer (e.g., the second printing layer) of the 3D object (step S30), and then controls the print head 12 to move along the Z axis, so as to locate the print head 12 at a printing height of the next printing layer of the 3D object (step S32). In one embodiment, the 3D printer 1 controls the print head 12 to lift along the Z axis for a second raising height in step S32. It should be mentioned that the second raising height may be same as the aforementioned first raising height, or may be different from the first raising height (detailed described in the following).

Next, the 3D printer 1 controls the print head 12 to print another slicing object of the next printing layer of the 3D object according to the object printing information corresponding to the next printing layer (step S34). For example, the 3D printer 1 may control the print head 12 to squeeze materials onto the slicing object of the first printing layer of the 3D object, so as to print a slicing object of a second printing layer of the 3D object.

After step S34, the 3D printer 1 determines whether the 3D object is printed completely (step S36), i.e., the 3D printer 1 determines if the current-printed printing layer is a last printing layer of the 3D object. If the 3D object is not printed completely yet, the 3D printer 1 re-executes step S30 to step S34 for obtaining another record of the object printing information that corresponds to the next printing layer, controlling the print head 12 to move along the Z axis (i.e., to lift for the second raising height), and controlling the print head 12 to print another slicing object of the next printing layer.

In the embodiment, the 3D printer 1 may continually execute step S30 to step S34, until multiple slicing objects that respectively correspond to the multiple printing layers of the 3D object are all printed completely and a physical 3D model corresponding to the 3D object is built via stacking the multiple slicing objects.

It is worth saying that each raft object and each slicing object printed by the 3D printer 1 has a fixed thickness. In one embodiment, the thickness may be a default value preset and saved in the 3D printer 1. In another embodiment, the thickness may vary according to the ingredients of the materials used by the 3D printer 1. In a further embodiment, multiple thickness values are provided by the 3D printer 1 to be chosen by the user.

In one of the exemplary embodiments, the aforementioned first raising height, the second raising height, and the third raising height may be the same value, and these heights may be equal to the thickness of each raft object and each slicing object. Therefore, the thickness of each layer of the printed raft and the thickness of each layer of the printed 3D model are all the same.

In another one of the exemplary embodiments, the aforementioned second raising height and the third raising height may be the same value (for example, the second raising height and the third raising height may be equal to the thickness of the raft object(s) and the slicing object(s)), and the first raising height may be different from the second raising height and the third raising height (for example, the first raising height may be larger than the second raising height or the third raising height, i.e., the first raising height may be larger than the thickness of the raft object(s) or the slicing object(s)). Therefore, the printed raft may be easily removed from the printed 3D model (detailed described in the following).

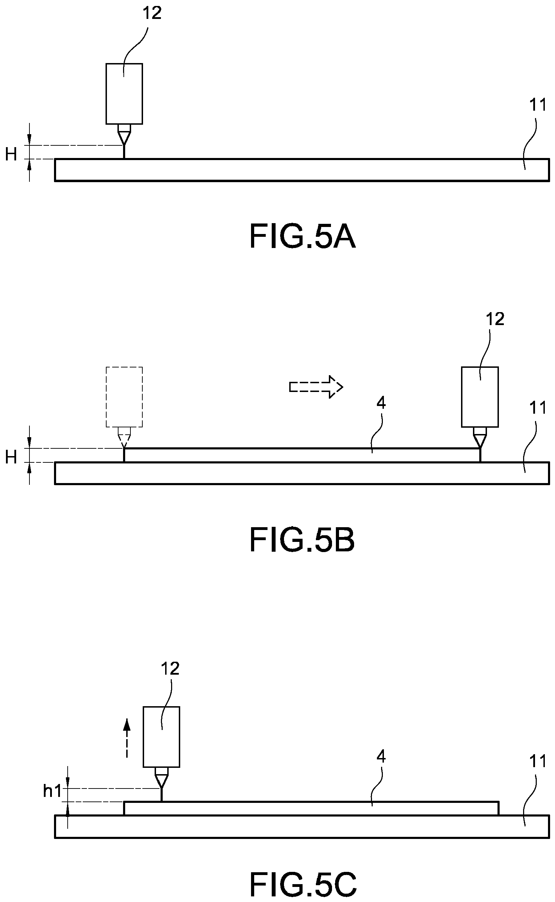

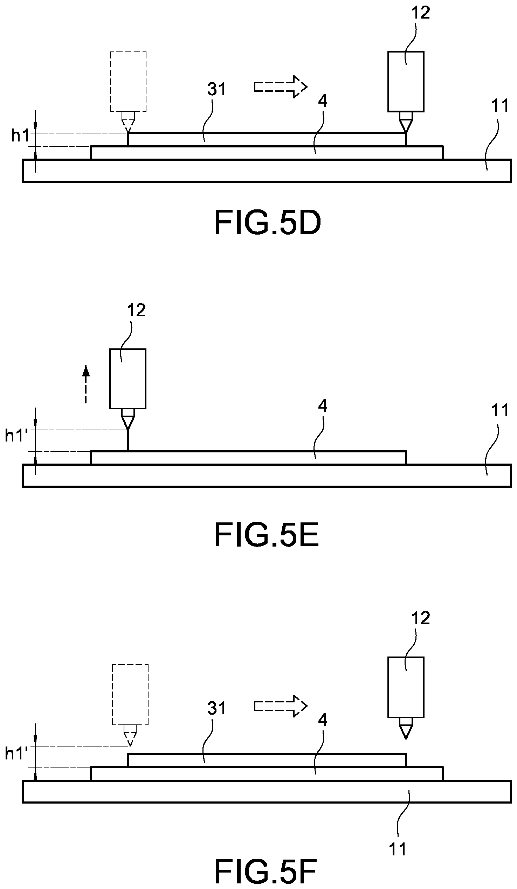

Please refer to Fig. 5A to Fig. 5D. Fig. 5A is a diagram showing a first printing action according to a first embodiment of the present invention. Fig. 5B is a diagram showing a second printing action according to the first embodiment of the present invention. Fig. 5C is a diagram showing a third printing action according to the first embodiment of the present invention. Fig. 5D is a diagram showing a fourth printing action according to the first embodiment of the present invention.

As shown in Fig. 5A, when printing a raft, the 3D printer 1 first controls the print head 12 to move to a position upon the printing platform 11 and locates the print head 12 at a printing height H. In the present embodiment, the printing height H equals the thickness of each raft object of the raft (if the raft includes multiple printing layers). In one embodiment, the aforementioned third raising height controlled by the 3D printer 1 in step S22 of Fig. 4A is equal to the printing height H.

Next, as shown in Fig. 5B, the 3D printer 1 controls the print head 12 to move and squeeze the materials according to the obtained raft printing information, so as to print a raft 4 on the printing platform 11. In the embodiment shown in Fig. 5B, a raft 4 including only one printing layer is taken as an example.

Next, as shown in Fig. 5C, after the raft 4 is printed completely, the 3D printer 1 controls the print head 12 to lift along the Z axis for a first raising height h1, so as to locate the print head 12 at a printing height of a first printing layer of a 3D object. Next, as shown in Fig. 5D, the 3D printer 1 controls the print head 12 to move and squeeze the materials according to the object printing information corresponding to the first printing layer of the 3D object, so as to print a slicing object 31 of the first printing layer of the 3D object on the printed raft 4.

In the embodiment shown in Fig. 5C and Fig. 5D, the first raising height h1 equals the thickness of each slicing object 31 of the 3D object. In one embodiment, the aforementioned first raising height controlled by the 3D printer 1 in step S26 of Fig. 4B is equal to the first raising height h1. In another embodiment, the thickness of each slicing object 31 equals the thick ness of each raft object of the raft 4, and the aforementioned third raising height, the first raising height, and the second raising height controlled by the 3D printer 1 in step S22 of Fig. 4A and step S26 and step S32 of Fig. 4B are all the same.

It is worth saying that though the present invention can prevent the warpage phenomenon from being generated on the bottom of the 3D model through printing the raft 4, but if the adhesion between the 3D model and the raft 4 is too strong, a user may unintentionally damage the bottom of the 3D model when removing the raft 4 from the 3D model. For obviating the above issue, the present invention may further reduce the adhesion between the 3D model and the raft 4 while printing the 3D model.

Please refer to Fig. 5E and Fig. 5F. Fig. 5E is a diagram showing a third printing action according to a second embodiment of the present invention. Fig. 5F is a diagram showing a fourth printing action according to the second embodiment of the present invention. A first printing action and a second printing action in the second embodiment are similar to that disclosed in Fig. 5A and Fig. 5B, and the description will be omitted here.

In the embodiment shown in Fig. 5E, after the raft 4 is printed completely, the 3D printer 1 controls the print head 12 to lift along the Z axis for a first raising height h1'. Next, as shown in Fig. 5F, the 3D printer 1 controls the print head 12 to move and squeeze the materials according to the object printing information corresponding to the first printing layer of the 3D object, so as to print a slicing object 31 of the first printing layer of the 3D object on the raft 4.

In the embodiment of Fig. 5E and Fig. 5F, the first raising height h1' is larger than the thickness of each slicing object 31 of the 3D object, especially larger than the thickness of the slicing object 31 of the first printing layer of the 3D object. In one embodiment, the aforementioned first raising height controlled by the 3D printer 1 in step S26 of Fig. 4B is equal to the first raising height h1'.

By way of using the first raising height h1', the squeezed materials may stay in the air for a longer time for cooling when the 3D printer 1 prints the slicing object 31 of the first printing layer of the 3D object. Accordingly, when contacting and covering the top face of the raft 4, the squeezed materials are at a semi-cooled state, so the adhesion between the slicing object 31 of the first printing layer of the 3D object and the raft 4 is effectively reduced. After the 3D model is printed completely, the user may easily remove the raft 4 from the 3D model (i.e., easily separates the top face of the raft 4 from the bottom of the 3D model).

It should be mentioned that the 3D printer 1 only needs to appropriately reduce the adhesion between the slicing object 31 of the first printing layer of the 3D object and the raft 4, but doesn't need to reduce the adhesion between each two adjacent slicing objects 31 of the 3D object, and doesn't need to reduce the adhesion between each two adjacent raft objects of the raft 4 either. According to above purpose, the aforementioned third raising height controlled by the 3D printer 1 in step S22 of Fig. 4A may be equal to the thickness of each raft object, and the aforementioned second raising height controlled by the 3D printer 1 in step S32 of Fig. 4B may be equal to the thickness of each slicing object 31.

In this embodiment, the aforementioned first raising height controlled by the 3D printer 1 in step S26 of Fig. 4B may be larger than the thickness of each slicing object 31, and especially larger than the thickness of the slicing object 31 of the first printing layer of the 3D object. Therefore, the above easy-to-be-removed effect can be achieved.

For the purpose of increasing the strength of the structure of the raft 4 and the 3D model, the 3D printer 1 may perform an infilling process to the raft 4 and/or the 3D model. In particular, the 3D printer 1 controls the print head 12 to squeeze the materials inside the raft 4 and/or the 3D model for performing the infilling process, so as to increase the adhesion between each two adjacent raft objects of the raft 4, and also increases the adhesion between each two adjacent slicing objects of the 3D model. In one embodiment, an infilling ratio of the infilling process is 100% (i.e., the inner part of the raft 4 and/or the 3D model are full infilled). In another embodiment, the infilling ratio of the infilling process may be set as a value that is larger than a default ratio and smaller than 100%.

In particular, after each raft object and each slicing object are printed, the 3D printer 1 may control the print head 12 to squeeze the materials to the inner part of each raft object and each slicing object, so as to perform the infilling process to the inner part of each raft object and each slicing object. Therefore, the contact area between each two adjacent objects is increased, and the adhesion between each two adjacent objects is increased as well.

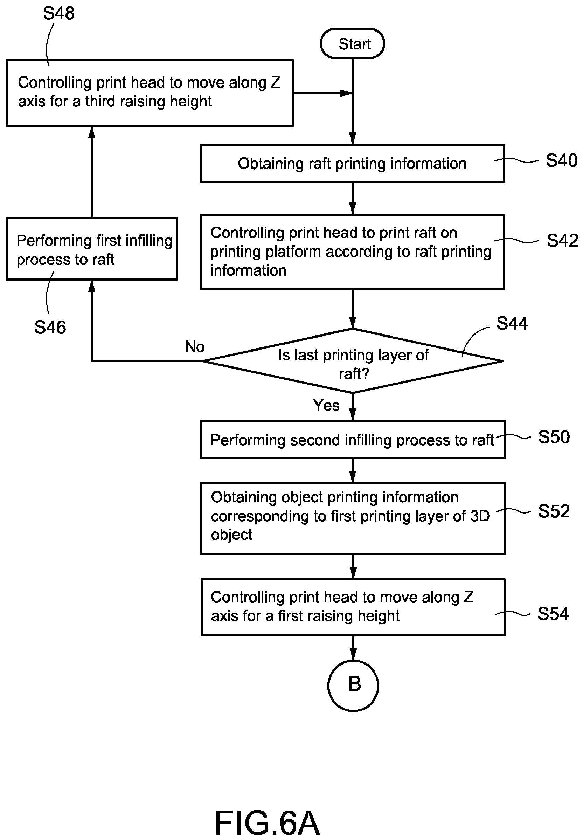

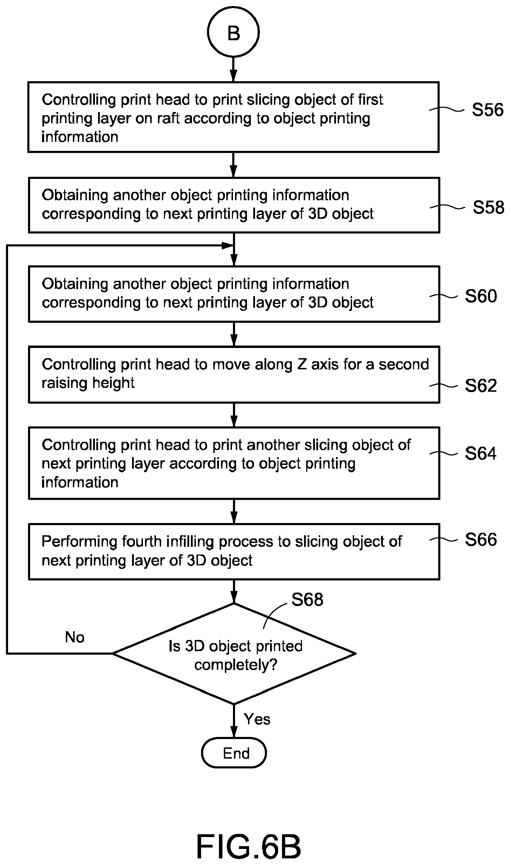

Please refer to Fig. 6A and Fig. 6B. Fig. 6A is a first printing flowchart according to a second embodiment of the present invention. Fig. 6B is a second printing flowchart according to the second embodiment of the present invention. In comparison with the first embodiment shown in Fig. 4A and Fig. 4B, the second embodiment of Fig. 6A and Fig. 6B further includes infilling steps for performing the infilling process to the inner part of the raft and the inner part of the slicing objects.

When performing printing, the 3D printer 1 first obtains the raft printing information (step S40), and controls the print head 12 to print a raft on the printing platform 11 according to the obtained raft printing information (step S42). Similar to the first embodiment of Fig. 4A and Fig. 4B, if the raft includes multiple printing layers, the 3D printer 1 may further determine whether the current-printed printing layer is a last printing layer of the raft after step S42 (step S44).

If the current-printed printing layer is not the last printing layer of the raft, the 3D printer 1 controls the print head 12 to squeeze the materials to the inner part of the raft (i.e., the inner part of a raft object of the raft printed in step S42), so as to perform a first infilling process to the raft (step S46). Next, the 3D printer 1 controls the print head 12 to lift along a Z axis (for example, controls the print head 12 to move for the aforementioned third raising height), so as to locate the print head 12 at a printing height of a next printing layer of the raft (step S48). Also, the 3D printer 1 re-executes step S40 to step S42 for obtaining the raft printing information corresponding to the next printing layer of the raft, and controlling the print head 12 to print the raft object of the next printing layer.

If the current-printed printing layer is the last printing layer of the raft, the 3D printer 1 controls the print head 12 to squeeze the materials to the inner part of the raft (i.e., the inner part of a raft object of the last printing layer of the raft) as well, so as to perform a second infilling process to the raft (step S50). In one embodiment, both the first infilling process and the second infilling process are full infilling the inner part of the raft (i.e., the infilling ratios of the first infilling process and the second infilling process are 100%). However, the infilling ratio may vary according to the parameter of the materials used by the 3D printer 1 (e.g., moisture degree, adhesion, etc.), not limited thereto.

After the raft is printed completely, the 3D printer 1 further obtains the object printing information corresponding to a first printing layer of a 3D object (step S52), and controls the print head 12 to lift along the Z axis (for example, controls the print head 12 to move for the aforementioned first raising height), so as to locate the print head 12 at a printing height of the first printing layer of the 3D object (step S54). Next, the 3D printer 1 controls the print head 12 to print a slicing object of the first printing layer on the raft according to the obtained object printing information corresponding to the first printing layer (step S56). In this embodiment, the first raising height may be larger than or equal to a thickness of the slicing object, not limited thereto.

After step S56, the 3D printer 1 controls the print head 12 to squeeze the materials to the inner part of the slicing object of the first printing layer of the 3D object, so as to perform a third infilling process to the slicing object of the first printing layer (step S58). In one embodiment, the third infilling process in step S58 is full infilling the inside of the slicing object. Otherwise, the third infilling process may determine an infilling ratio adopted by the third infilling process according to the parameter of the materials, not limited thereto.

In should be mentioned that in one of the exemplary embodiments, the 3D printer 1 may adopt a first infilling angle to perform the second infilling process in step S50, and adopts a second infilling angle to perform the third infilling process in step S58, and makes the first infilling angle equals the second infilling angle (detailed described in the following).

After step S58, the 3D printer 1 obtains another object record of the printing information corresponding to next printing layer of the 3D object (step S60), and controls the print head 12 to lift along the Z axis (for example, controls the print head 12 to move for the aforementioned second raising height), so as to locate the print head 12 at a printing height of the next printing layer (step S62). Next, the 3D printer 1 controls the print head 12 to print another slicing object of the next printing layer of the 3D object according to the obtained object printing information corresponding to the next printing layer (step S64).

After step S64, the 3D printer 1 controls the print head 12 to squeeze the materials to the inner part of the slicing object of the next printing layer, so as to perform a fourth infilling process to the slicing object of the next printing layer (step S66). In one embodiment, the fourth infilling process in step S66 is full filling the inside of the slicing object. Otherwise, the fourth infilling process may determine an infilling ratio adopted by the fourth infilling process according to the parameter of the materials, not limited thereto.

After step S66, the 3D printer 1 determines whether the 3D object is printed completely (step S68). In the embodiment, the 3D printer 1 re-executes step S60 to step S66 before the 3D object is printed completely, so as to keep printing each slicing object of each printing layer of the 3D object until the 3D object is completed.

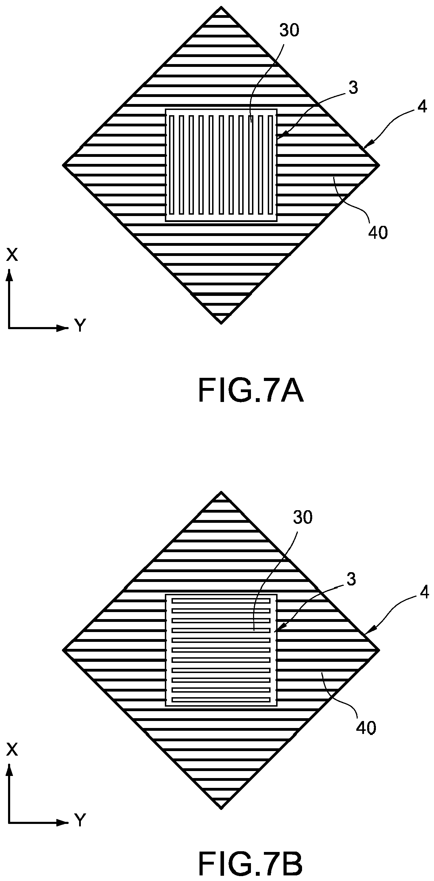

Fig. 7A is a diagram showing fillers according to a first embodiment of the present invention. Fig. 7B is a diagram showing fillers according to a second embodiment of the present invention.

Fig. 7A and Fig. 7B disclose two different embodiments, each embodiment shows the situation of the top face of a raft 4 (i.e., a raft object of a last printing layer of the raft 4) and the bottom of a 3D model 3 (i.e., a slicing object of a first printing layer of the 3D model 3). As shown in Fig. 7A and Fig. 7B, the inner part of the raft object includes a raft filler 40 generated by the aforementioned second infilling process, and the inner part of the slicing object includes an object filler 30 generated by the aforementioned third infilling process.

In the embodiment shown in Fig. 7A, the second infilling process is performed by reference to a random angle, and the third infilling process is also performed by reference to a random angle (which means the print head 12 is controlled to squeeze the materials along random directions when performing the second infilling process and the third infilling process). In this embodiment, there are many intersection points generated between the object filler 30 and the raft filler 40, and the intersection points may cause a huge adhesion between the slicing object and the raft object. As a result, a user will be hard to separate the 3D model 3 and the raft 4.

In the embodiment shown in Fig. 7B, the first infilling angle adopted by the second infilling process in step S50 is parallel to the second infilling angle adopted by the third infilling process in step S58. As shown in Fig. 7B, the print head 12 in this embodiment is controlled to squeeze the materials along an X axis when performing the second infilling process (i.e., the first infilling angle is 0 degree), and also to squeeze the materials along the X axis when performing the third infilling process (i.e., the second infilling angle is 0 degree).

The X axis is taken as an example in the above description, however, as long as the first infilling angle is parallel to the second infilling angle (i.e., the printing direction of the second infilling process equals another printing direction of the third infilling process), the materials at the top face of the raft 4 (i.e., the raft object of the last printing layer of the raft 4) will be parallel to the materials at the bottom of the 3D model 3 (i.e., the slicing object of the first printing layer of the 3D model 3). In another embodiment, the second infilling process and the third infilling process may not be performed along the X axis.

In the embodiment of Fig. 7B, a user may force along a direction that is vertical to the infilling angle of the second infilling process and the third infilling process, and easily separates the 3D model 3 and the raft 4. Therefore, the user may easily remove the raft 4 from the 3D model 3 without causing any damage to the bottom of the 3D model 3.

It is worth saying that the 3D printer 1 in the present invention doesn't need to reduce the adhesion between each two adjacent raft objects of the raft 4, so the 3D printer 1 may adopt random angles to perform the first filling process in step S46. Also, the 3D printer 1 doesn't need to reduce the adhesion between each two adjacent slicing objects of the 3D model 3, so the 3D printer 1 may adopt random angles to perform the fourth infilling process in step S66.

By way of the printing method disclosed in each embodiment of the present disclosure, a warpage phenomenon may be prevented from being generated on the bottom of a printed 3D model, and the quality of the 3D model is advanced.

## Claims

1. A warpage prevented printing method of 3D printer, adopted by a 3D printer (1) having a printing platform (11) and a print head (12), comprising:
a) obtaining a record of raft printing information;
b) controlling the print head (12) to print a raft (4) on the printing platform (11) according to the raft printing information;
c) obtaining a record of object printing information corresponding to a first printing layer of a 3D object, and controlling the print head (12) to move along a Z axis;
d) controlling the print head (12) to print a slicing object (31) of the first printing layer on the raft (4) according to the object printing information corresponding to the first printing layer;
e) obtaining another record of the object printing information corresponding to a next printing layer of the 3D object, and controlling the print head (12) to move along the Z axis;
f) controlling the print head (12) to print another slicing object (31) of the next printing layer according to the another record of the object printing information corresponding to the next printing layer; and
g) re-executing step e and step f before the 3D object is printed completely.

2. The warpage prevented printing method of 3D printer in claim 1, wherein an area of the raft (4) is larger than another area of the slicing object (31) of the first printing layer of the 3D object.

3. The warpage prevented printing method of 3D printer in claim 1, further comprising following steps before step a:
a01) determining whether a raft applying function of the 3D printer (1) is enabled; and
a02) executing step a to step g if the raft applying function is enabled.

4. The warpage prevented printing method of 3D printer in claim 1, wherein step a is to obtain the raft printing information corresponding to one of multiple printing layers of the raft (4), step b is to control the print head (12) to print one of a plurality of raft objects of the raft (4) according to the raft printing information, and the warpage prevented printing method further comprises following steps:
b1) determining whether the raft (4) is printed completely after step b;
b2) obtaining another record of the raft printing information corresponding to next printing layer of the raft (4), and controlling the print head (12) to lift along the Z axis, and re-executing step b and step b1 before the raft (4) is printed completely; and
b3) executing step c after the raft (4) is printed completely.

5. The warpage prevented printing method of 3D printer in claim 1, wherein step c and step e are controlling the print head (12) to lift along the Z axis for a raising height, and the raising height equals a thickness of each of the slicing objects (31)

6. The warpage prevented printing method of 3D printer in claim 1, further comprising following step after step b:
b4) controlling the print head (12) to squeeze materials to an inner part of the raft (4) for performing a first infilling process.

7. The warpage printing method of 3D printer in claim 6, further comprising following step after step d:
d1) controlling the print head (12) to squeeze materials to an inner part of the slicing object (31) of the first printing layer of the 3D object for performing a second infilling process.

8. The warpage prevented printing method of 3D printer in claim 7, wherein the first infilling process is performed according to a first infilling angle, the second infilling process is performed according to a second infilling angle, and the first infilling angle is parallel to the second infilling angle.

9. The warpage prevented printing method of 3D printer in claim 8, wherein the first infilling process is full infilling the inner part of the raft (4), and the second infilling process is full infilling the inner part of the slicing object (31) of the first printing layer of the 3D object.

10. A warpage prevented printing method of 3D printer, adopted by a 3D printer (1) having a printing platform (11) and a print head (12), comprising:
a) obtaining a record of raft printing information;
b) controlling the print head (12) to print a raft (4) on the printing platform (11) according to the raft printing information;
c) obtaining a record of object printing information corresponding to a first printing layer of a 3D object, and controlling the print head (12) to lift along a Z axis for a first raising height;
d) controlling the print head (12) to print a slicing object (31) of the first printing layer of the 3D object on the raft (4) according to the object printing information corresponding to the first printing layer of the 3D object;
e) obtaining another record of the object printing information corresponding to a next printing layer of the 3D object, and controlling the print head (12) to lift along the Z axis for a second raising height, wherein the second raising height is different from the first raising height;
f) controlling the print head (12) to print another slicing object (31) of the next printing layer of the 3D object according to the another record of the object printing information corresponding to the next printing layer of the 3D object; and
g) re-executing step e and step f before the 3D object is printed completely.

11. The warpage prevented printing method of 3D printer in claim 10, wherein an area of the raft (4) is larger than another area of the slicing object (31) of the first printing layer of the 3D object.

12. The warpage prevented printing method of 3D printer in claim 10, wherein the first raising height is larger than a thickness of each of the slicing objects (31).

13. The warpage prevented printing method of 3D printer in claim 10, wherein step a is to obtain the raft printing information corresponding to one of multiple printing layers of the raft (4), step b is to print one of a plurality of raft objects of the raft (4) according to the raft printing information, and the warpage prevented printing method further comprises following steps:
b1) determining whether the raft (4) is printed completely after step b;
b2) obtaining another record of the raft printing information corresponding to a next printing layer of the raft (4), and controlling the print head (12) to lift along the Z axis for a third raising height, and re-executing step b and step b1 before the raft (4) is printed completely; and
b3) executing step c after the raft (4) is printed completely.

14. The warpage prevented printing method of 3D printer in claim 13, wherein the second raising height and the third raising height are equal to a thickness of each of the slicing objects (31) and each of the raft objects.

15. The warpage prevented printing method of 3D printer in claim 10, further comprising following steps:
h) controlling the print head (12) to squeeze materials to an inner part of the raft (4) after step b for performing a first infilling process; and
i) controlling the print head (12) to squeeze materials to another inner part of the slicing object (31) of the first printing layer of the 3D object after step d for performing a second infilling process, wherein the first infilling process is performed according to a first infilling angle, the second infilling process is performed according to a second infilling angle, and the first infilling angle is parallel to the second infilling angle.
